(19) **Europäisches Patentamt / European Patent Office / Office européen des brevets**

(11) **EP 4 657 205 A1**

(12) # EUROPEAN PATENT APPLICATION

(43) Date of publication:
**03.12.2025 Bulletin 2025/49**

(21) Application number: **25177463.4**

(22) Date of filing: **19.05.2025**

(51) International Patent Classification (IPC):
**G06F 1/3206** (2019.01)    **G06F 1/324** (2019.01)
**G06F 1/3296** (2019.01)

(52) Cooperative Patent Classification (CPC):
**G06F 1/3206; G06F 1/324; G06F 1/3296**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.05.2024 US 202463652707 P
31.03.2025 US 202519095114**

(71) Applicant: **MEDIATEK INC.
Hsinchu City 30078 (TW)**

(72) Inventors:
• YANG, Chun-Lin
  30078 Hsinchu City (TW)
• CHEN, Wei-Jen
  30078 Hsinchu City (TW)
• CHEN, Hui-Ya
  30078 Hsinchu City (TW)
• WU, Hung-Yi
  30078 Hsinchu City (TW)

(74) Representative: **Wright, Howard Hugh Burnby
Withers & Rogers LLP
2 London Bridge
London SE1 9RA (GB)**

(54) **PDN FOR POWER CONTROL OF PROCESSING UNIT**

(57)     In an aspect of the disclosure, a PDN for power control of a processing unit includes a loading aware engine configured to receive multiple characteristic signals from the processing unit, and determine a loading information of the processing unit according to the multiple characteristic signals using a trained model. The loading information is related to a dynamic power and/or a dynamic current. The PDN also includes a clock generator configured to provide a clock signal with an operating frequency to the processing unit. The PDN also includes a controller coupled to the loading aware engine and the clock generator, and configured to control the clock generator based on the loading information.

FIG. 2

EP 4 657 205 A1

**Description**

TECHNICAL FIELD

The disclosure relates in general to a power distribution network (PDN) for a processing unit, and more particularly, to an electronic device including the PDN and the operation method of the PDN.

BACKGROUND

Generally, PMIC (power management integrated circuit) with multiphase voltage regulator (comprising multiple voltage converters) can deliver larger amounts of electrical power or current, which is often beneficial for the stability and performance of the processing unit. The processing unit (or xPU, such as CPU, GPU or APU &etc.) has complex load profile due to load changes drastically under different scenarios and performance levels. To meet short periods of the worst-case power demand (such as high-power demands while high performance levels), which cause harsh PDN (power distribution network) requirements of the processing unit, adding more voltage regulators to PMIC increases the PDN cost. Also, due to lack of processing unit's loading awareness, it may cause loss of the computing power and performance of the processing unit. Thus, there are needs for techniques of PDN with in-situ limitation for processing unit's frequency to meet the PDN requirement.

SUMMARY

The innovative approach employs a sub-microsecond adaptive performance limitation strategy. This strategy aims to maximize performance by utilizing the PDN's limitations as much as possible. Through this innovative approach, the system operates within the PDN's capacity while striving to achieve the highest possible performance levels.

The first aspect of the present disclosure features a power distribution network (PDN) for power control of a processing unit. The PDN includes a loading aware engine configured to receive multiple characteristic signals from the processing unit, and determine a loading information of the processing unit according to the multiple characteristic signals using a trained model. The loading information is related to a dynamic power and/or a dynamic current. The PDN also includes Pa clock generator configured to provide a clock signal with an operating frequency to the processing unit. The PDN also includes a controller coupled to the loading aware engine and the clock generator, and configured to control the clock generator based on the loading information.

The second aspect of the present disclosure features an electronic device. The electronic device includes a processing unit and a PDN coupled to the processing unit. The PDN includes a clock generator configured to provide a clock signal with an operating frequency to the processing unit. The PDN also includes a loading aware engine configured to receive multiple characteristic signals from the processing unit, and determine a loading information of the processing unit according to the multiple characteristic signals using a trained model. The loading information is related to a dynamic power and/or a dynamic current. The PDN also includes a controller coupled to the loading aware engine and the clock generator, and configured to control the clock generator based on the loading information.

The third aspect of the present disclosure features an operation method of a PDN for power control of a processing unit. The operation method includes receiving multiple characteristic signals from the processing unit. The operation method also includes determining, by a trained model, a loading information of the processing unit according to the multiple characteristic signals. The loading information is related to a dynamic power and/or a dynamic current. The operation method also includes controlling an operating frequency provided to the processing unit based on the loading information.

The details of one or more disclosed implementations are set forth in the accompanying drawings and the description below. Other features, aspects, and advantages will become apparent from the description, the drawings and the claims.

BRIEF DESCRIPTION OF THE DRAWINGS

FIGs. 1A and 1B are diagrams illustrating example relations between power demand and performance level of the processing unit regarding the PDN limit.
FIG. 2 is a block diagram illustrating the electronic device including an example PDN coupled to the processing unit according to some implementations of the present disclosure.
FIG. 3 is a diagram illustrating training sets of the electrical nodes and selection of electrical nodes of the processing unit according to some implementations of the present disclosure.

FIG. 4 is a time diagram illustrating the switching period of an example electrical node in training sets of the processing unit according to some implementations of the present disclosure.

FIG. 5 is a diagram illustrating the relation between power demand and performance level of the processing unit coupled to the example PDN according to some implementations of the present disclosure.

FIG. 6 is a diagram illustrating a dead-zone section for controlling the operating frequency for processing unit according to some implementations of the present disclosure.

FIG. 7 is a flow chart illustrating an example operation procedure for the PDN according to some implementations of the present disclosure.

In the following detailed description, for purposes of explanation, numerous specific details are set forth in order to provide a thorough understanding of the disclosed implementations. It will be apparent, however, that one or more implementations may be practiced without these specific details. In other instances, well-known structures and devices are schematically shown in order to simplify the drawing.

DETAILED DESCRIPTION

The following disclosure provides many different implementations, or examples, for implementing different features of the provided subject matter. Specific examples of components and arrangements are described below to simplify the present disclosure. In addition, the present disclosure may repeat reference numerals and/or letters in the various examples. This repetition is for the purpose of simplicity and clarity and does not in itself dictate a relationship between the various implementations and/or configurations discussed.

The terms "comprise," "comprising," "include," "including," "has," "having," etc. used in this specification are open-ended and mean "comprises but not limited." The terms used in this specification generally have their ordinary meanings in the art and in the specific context where each term is used. The use of examples in this specification, including examples of any terms discussed herein, is illustrative only, and in no way limits the scope and meaning of the disclosure or of any exemplified term. Likewise, the present disclosure is not limited to various implementations given in this specification.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative implementations but, like the illustrative implementations, should not be used to limit the present disclosure. The elements included in the illustrations herein may not be drawn to scale.

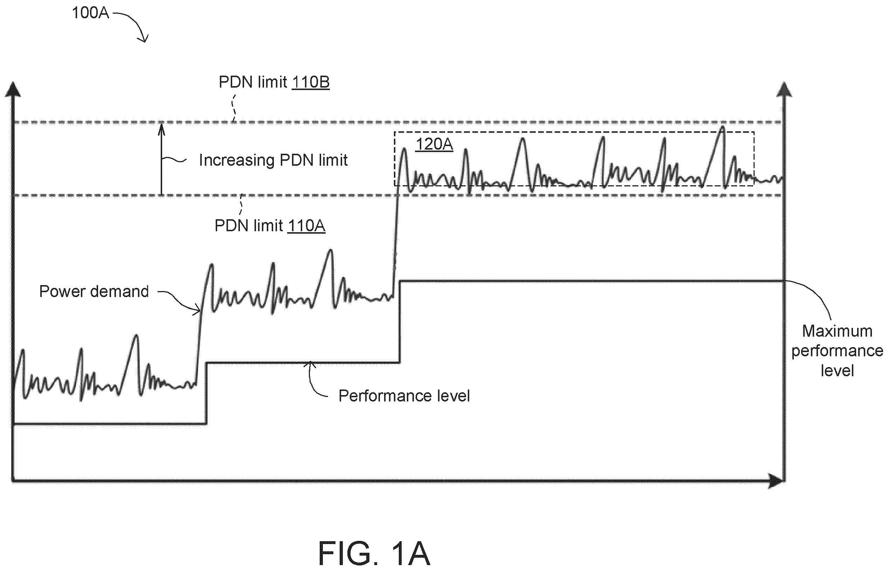

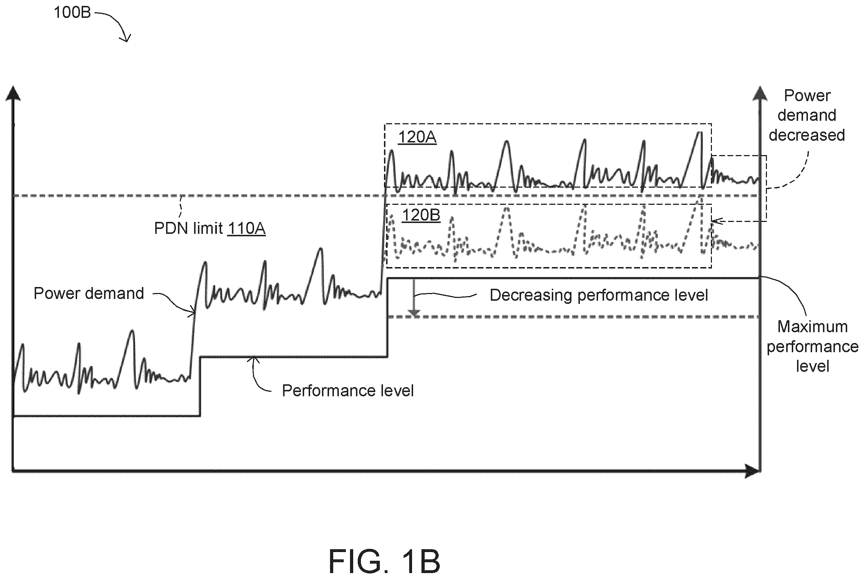

FIGs. 1A and 1B are diagrams illustrating example relations 100A and 100B between power demand and performance level of the processing unit regarding the PDN limit 110A. Referring to FIG. 1A, to meet short periods of high power demands, such as the high power demand section 120A excessing the PDN limit 110A while the processing unit is operating in maximum performance level, more voltage regulator should be added in the PMIC to increase the PDN limit from the PDN limit 110A to a higher PDN limit 110B, thereby covering the high power demand section 120A. By this way, the PDN cost will be increased as discussed above.

Referring to FIG. 1B, to meet short periods of high-power demands, such as the high-power demand section 120A excessing the PDN limit 110A while the processing unit is operating in maximum performance level, another approach is decreasing performance level. This can be achieved by decreasing an expected operating performance point (OPP) controlled by a software, which will downgrade the high-power demand section 120A to a lowered power demand section 120B, thereby meeting the PDN limit 110A. By this way, the maximum performance level of the processing unit is throttled, and the computing power is also decreased. Different OPPs correspond to different combinations of a supply voltage and an operation frequency. For example, under high loading conditions, the system of the electronic device may choose an OPP with high voltage and high frequency to provide higher performance; while under low loading (or idle) conditions, the system may choose an OPP with low voltage and low frequency to save power.

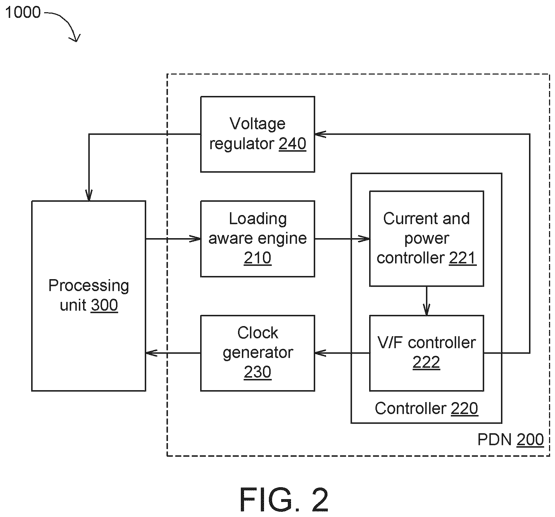

FIG. 2 is a block diagram illustrating the electronic device 1000 including an example PDN 200 coupled to the processing unit 300 according to some implementations of the present disclosure. The electronic device 1000 includes the PDN 200 and the processing unit 300. In the example of FIG. 2, the PDN 200 can be a chip or an integrated circuit (IC), and a voltage regulator 240 may be included by the PDN 200, such as "on-chip or internal voltage regulator". In another example, the voltage regulator 240 can be not included in the PDN 200, such as "off-chip or external voltage regulator". The voltage regulator 240 is coupled to the processing unit 300 and is configured to provide a supply voltage to the processing unit 300. In the embodiments of the present disclosure, the processing unit 300 can be regarded as a load (also referred as loading) of the PDN 200, and the PDN 200 is configured to provide a clock signal and/or a supply voltage to the processing unit 300. In some embodiment, the processing unit 300 can be a CPU (central processing unit), GPU (graphic processing unit), APU (accelerated processing unit), DSP (digital signal processor), NPU (neural processing unit), TPU (tensor processing unit), etc. Therefore, the processing unit (PU) can also be called as xPU.

In the example of FIG. 2, the PDN 200 includes a loading aware engine 210, a controller 220 and a clock generator 230. In the example of FIG. 2, the clock generator 230 is included in the PDN 200. In another example, the clock generator 230 can be not included in the PDN 200. The clock generator 230 is coupled to the processing unit 300 and is configured to provide a clock signal with an operating frequency to the processing unit 300.

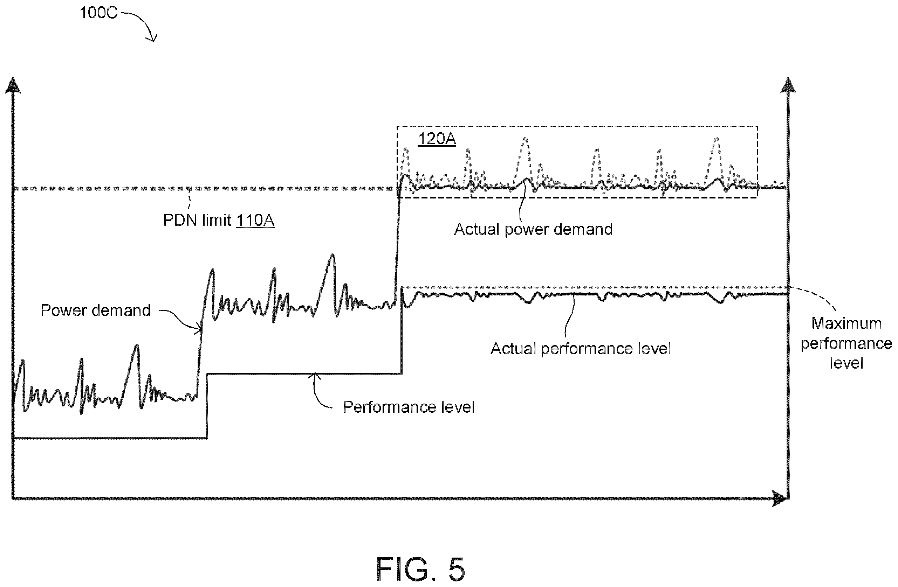

The loading aware engine 210 of the PDN 200 is configured to receive multiple characteristic signals from the processing unit 300. Specifically, the loading aware engine 210 includes function for rapidly detecting loading (or power demand) change of the processing unit 300 under different operation scenario, such as corresponding to different performance levels as shown by FIGs. 1A, 1B and 5. For monitoring and controlling current/power consumption of the processing unit 300, a specific set of electrical nodes of the processing unit 300 are selected from all electrical nodes of the processing unit 300 through an offline machine learning, wherein the each signal at the selected specific set of electrical nodes of the processing unit 300 may be referred to as a characteristic (critical) signal, which can characterize the power consumption or demand of the processing unit 300. For example, the characteristic signals at these specific electrical nodes are highly correlated with the power demand/consumption (e.g., dynamic power or dynamic current) of the processing unit 300. In the embodiment of the present disclosure, a trained model is obtained through offline machine learning in advance, where the trained model (which can also be described as a dynamic current/power model) is used to predict the dynamic power or dynamic current of the processing circuit 300 based on the characteristic signals at the specific set of electrical nodes. In addition, the characteristic signals can also include signals characterizing the temperature of spots of interest, hot spots, etc. In the embodiment, the characteristic signals are related to loading (or power demand) of the processing unit 300. In other words, the characteristic signals are used for characterizing complex load profile of the processing unit 300. In one example, the characteristic signals may include first signals related to a dynamic power/current (related to dynamic power consumption) of the processing unit 300, for example, the first signals may comprise the characteristic signals of the selected specific set of electrical nodes from the processing unit 300. Alternatively, the characteristic signals may further include second signals related to a leakage power/current (related to static power consumption) of the processing unit 300, for example, the second signals may comprise the characteristic signal characterizing the temperature of the processing unit 300 and the characteristic signal characterizing the supply voltage of the processing unit 300. Based on the characteristic signals from the processing unit 300, the loading information of the processing unit 300 can be provided by the loading aware engine 210, and the loading information can be further used for controlling current/power consumption of the processing unit 300. The characteristic signals and the loading information of the processing unit 300 will be detailed described as follows. In the embodiment, the loading information may comprise power and/or current, for example, the power/current may refer to a dynamic power/current or a total power/current, wherein the total power/current refers to a sum of dynamic power/current and leakage power/current. That is, the loading information comprises a power metric and/or a current metric which is related to the dynamic power and/or dynamic current of the processing unit respectively. For the convenience of explanation, the total power/current is used as an example of the loading information for illustration below. However, the present disclosure is not limited thereto. For example, in some implementations, corresponding control can also be performed based on the dynamic power/-current.

In the embodiment, to provide loading information (such as total power or current of the processing unit), both the dynamic power/current and the leakage power/current are considered. The first signals among the characteristic signals can be related to the dynamic power (or dynamic current) of the processing unit 300. Also, the second signals among the characteristic signals can be related to the leakage power (or leakage current) of the processing unit 300. Thus, the total power ($P_{TOT}$) and the total current ($I_{TOT} = P_{TOT}/V$) of the processing unit 300 can be respectively indicated by:

Total power ($P_{TOT}$) = dynamic power ($P_{DYN}$) + leakage power ($P_{LKG}$);

Total current ($I_{TOT}$) = dynamic current ($I_{DYN}$) + leakage current (ILKG)

and

The leakage current (or power) is physically dependent on the supply voltage and temperature of the processing unit 300, hence, the leakage current (or power) can be estimated by the supply voltage and temperature of the processing unit 300 during under different operation scenarios. The leakage current (or power) can be fitted using on-die run-time voltages and temperatures (e.g., from on-die voltage and temperature sensors), and per-die reference leakage current or power can be measured at a finite sets of reference voltage and temperature pairs, for example, per-die characterization and the per-die reference leakage current (or power) can be recorded in eFuse during the mass production CP (chip probing) or FT (final test) flow. In one example, fitting methods can be (but not limited to) n-th order polynomial or exponential fitting, and the calculation can be either software or hardware-based. Thus, the leakage current (or power) can be estimated or updated from voltages and temperatures in the processing unit 300.

To obtain the dynamic current (or power), the dynamic power and dynamic current of CMOS integrated circuit included in the processing unit 300, by physical definition, can be respectively represented by:

$$P_{DYN} = \sum_{i=0}^{n} \alpha_i F_i C_i V^2 \ldots\ldots \text{equation (1)};$$

and

$$I_{DYN} = \sum_{i=0}^{n} \alpha_i F_i C_i V \ldots\ldots \text{equation (2)}$$

Wherein n is total number of electrical nodes (such as millions to billions for a typical xPU (i.e., the processing unit 300)), $\alpha$ is switching activity (such as toggle rate or switching probability: 0~1) of an electrical node, F is switching frequency of an electrical node, C is equivalent capacitance of an electrical node and V is voltage swing of an electrical node while switched from logical 0 to 1 and vice versa, such as, in most cases, V is a voltage across supply voltage and ground GND (such as, the supply voltage provided to the processing unit 300).

For obtaining an average dynamic power consumption (such as, dynamic power or dynamic current) in a time frame, then the switching activity ($\alpha_i$) multiplied by switching frequency ($F_i$) can be respectively represented as the toggle counts $ToggleCount_i$ in the time frame of interest. Therefore, the equation (1) and (2) can be expressed as follows:

$$P_{DYN,AVG} = V^2 \sum_{i=0}^{n}(ToggleCount_i C_i) =$$
$$V^2 \sum_{i=0}^{n}(ToggleCount_i Weight_i)\ldots\ldots \text{equation (3)};$$

and

$$I_{DYN,AVG} = V \sum_{i=0}^{n}(ToggleCount_i C_i) =$$
$$V \sum_{i=0}^{n}(ToggleCount_i Weight_i)\ldots\ldots \text{equation (4)}$$

Thus, in order to obtain $P_{DYN,AVG}$ and $I_{DYN,AVG}$ in a time frame, the toggle counts of every electrical nodes weighted by respective node capacitances ($C_i$ can be rewritten as a weight $Weight_i$) in the time frame of interest need to be calculated firstly.

As discussed above, the specific set of electrical nodes of the processing unit 300 for providing characteristic signals are selected in advance from all electrical nodes of the processing unit 300, and these characteristic signals are related to the power consumption of the processing unit 300 as mentioned above. Therefore, through machine learning methods, these characteristic signals at the specific set of electrical nodes of the processing unit 300 can be used as inputs for modeling the weighted toggle counts ($\sum_{i=0}^{n}(ToggleCount_i Weight_i)$) of all electric nodes in the processing unit 300, to obtain a trained model. Therefore, after obtaining the trained model, the loading aware engine 210 can use the trained model to infer the runtime weighted toggle counts of all electric nodes in the processing unit 300 based on the runtime characteristic signals at the specific set of electrical nodes of the processing unit 300, thus obtaining the runtime dynamic power or dynamic current according to the runtime weighted toggle counts and the voltage V of the processing unit 300 as represented as equation (3) and (4).That is to say, in the embodiment, the weighted toggle counts of all electrical nodes in the processing unit 300 (or xPU) is modeled using only a finite set of electrical nodes (for example, experimental results showed that tens of characteristic signals are enough to achieve an acceptable accuracy). Hence, through the machine learning method, the trained model for inferring the weighted toggle counts of all electrical nodes in the processing unit 300 according to the characteristic signals on a specific set of electrical nodes is obtained. It is noted that the above description is only an example by definition of the dynamic power/current. The actual formula used could contain other (including, but not limited to, multiplicative or additive) compensating/adjusting terms. These compensating terms could be fixed (constant) or variables (that depends on many other factors such as voltage or xPU's operating conditions). In another embodiment, the exponent of variables in the original equation or the aforementioned compensating terms could also be adjusted to accommodate for the non-idealities. For example, the exponent of the V could be 1.n and 2.n instead of 1 and 2 for dynamic current and power, respectively.

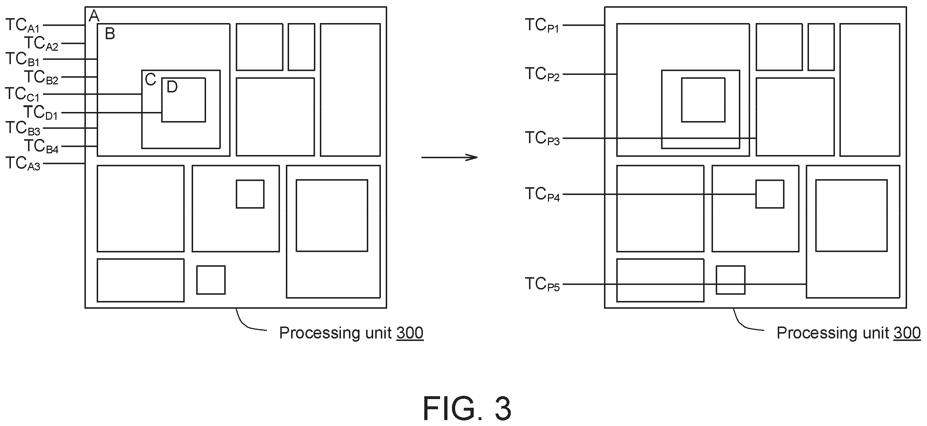

FIG. 3 is a diagram illustrating training sets of the electrical nodes ($TC_{A1}$ to $TC_{D1}$) and selection of electrical nodes ($TC_{P1}$ to $TC_{P5}$) of the processing unit 300 according to some implementations of the present disclosure. The selection of electrical nodes ($TC_{P1}$ to $TC_{P5}$) for providing characteristics signals and deriving the signals' weightings (or referred as coefficients) are based on offline machine learning. Power traces from various scenarios (including but not limited to xPU benchmark patterns) can be used as training sets, such as the electrical nodes $TC_{A1}$ to $TC_{D1}$ of FIG. 3. In one embodiment, the on-die hardware (such as the loading aware engine 210) then uses the offline trained model to calculate the sum of weighted toggle counts (for example, but not limited to) of selected nodes. Finally, the on-die dynamic power or current can be obtained by multiplying $V^2$ or V from on-chip voltage sensor respectively. It is noted that the exact formula to estimate the dynamic current or power may include, but not limited to, fixed or variable compensating terms to accommodate for the non-idealities.

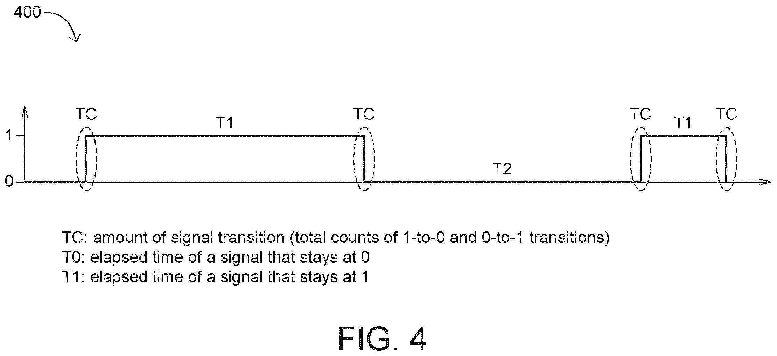

FIG. 4 is a time diagram illustrating the switching period 400 of an electrical node in training sets of the processing unit 300 according to some implementations of the present disclosure. In one embodiment of the present invention, the interpretability of the model can be enhanced by limiting the signal pool during the training process. For example, the signal pools can be restricted to or further include active/idle signals of various functional blocks within the processing unit 300 (or xPU). In this scenario, instead of using the weighted toggle counts (TC) as the model's input, parameters T1 or T0 in switching period 400 may also be used. Consequently, it can be expected that the weightings of each selected signal derived from machine learning (ML) can be interpreted as the power consumptions ratios of the functional blocks that the selected active/idle signals belong to.

In some implementations, the processing unit 300 (or xPU) are typically equipped with performance monitor units (PMUs) or performance counters (PCs) that contain runtime statistics of various functional blocks of the processing unit 300 (or xPU). In one embodiment of the present disclosure, signals from these PMUs or PCs can be selected during the training process. Alternatively, the signal pool can be actively limited to or further include signals from the PMUs or PCs to enhance interpretability.

Referring back to FIG. 2, the controller 220 of the PDN 200 is coupled to the loading aware engine 210, the clock generator 230 and the voltage regulator 240. The controller 220 is configured to receive the loading information of the processing unit 300 from the loading aware engine 210 and control the clock generator 230 and/or the voltage regulator 240 based on the loading information of the processing unit 300, for example, decreasing the operating frequency for the processing unit 300, or decreasing the operating frequency and the supply voltage for the processing unit.

Specifically, the controller 220 includes the current and power controller 221 and the V/F (voltage/frequency) controller 222. In one embodiment, the V/F controller 222 is a hardware-based voltage/frequency controller, and coupled to the current and power controller 221, for example, the V/F controller 222 may comprise at least one comparator. The loading aware engine 210 is coupled to the current and power controller 221, and further form closed-loop feedback. Since the loading aware engine 210 can infer runtime loading information based on runtime characteristic signals, the response time of the PDN can be shorten to micro-seconds level and the control of current or power of the processing unit 300 can be also accelerated. To adjust power consumption of the processing unit 300, the current and power controller 221 compares the loading information with a corresponding threshold of at least one threshold. For example, when the loading information is a power metric, the corresponding threshold is a threshold for the power metric (also referred as a power threshold); when the loading information is a current metric, the corresponding threshold is a threshold for the current metric (also referred as a current threshold); when the loading information comprises both the power metric and the current metric, each metric is compared with its corresponding threshold. In one embodiment, the threshold can be predetermined as a PDN limit (such as, the PDN limit 110A of FIG.s 1A, 1B and 5 for power metric) or slightly less than the PDN limit (i.e., the power threshold is the same or very close to the PDN limit). Understandably, the PDN limit is at least one specification parameter limited by the hardware structure of the PDN, i.e., at least one limited value (or constraint value) regarding power and/or current limited by the hardware structure of the PDN, such as PDN limit for power and/or PDN limit for current.

In the embodiment, the loading information is at least related to dynamic power or dynamic current. For example, the loading information may comprise either or both the dynamic power and dynamic current. For another example, the loading information may further be related to a leakage power or leakage current, hence the loading information may comprise either or both the total power and total current, wherein the total power is equal to the sum of dynamic power and leakage power, and the total current is equal to the sum of dynamic current and leakage current. That is, in one example, the loading information may be a power metric or current metric. In one another example, the loading information may comprise both the power metric and the current metric. Upon the current and power controller 221 determining that the loading information is higher than the corresponding threshold (for example, the power metric is higher than the power threshold and/or the current metric is higher than the current threshold), the current and power controller 221 sends a throttle request to the V/F controller 222, and then, the V/F controller 222 sends a frequency request to the clock generator 230 for decreasing the operating frequency provided to the processing unit 300. In some implementations, upon determining that the operating frequency provided to the processing unit 300 is decreased, the V/F controller 222 further sends a voltage request to the voltage regulator 240 for decreasing the supply voltage provided to the processing unit 300, thereby accommodating the decrease of the operating frequency provided to the processing unit 300 to reduce power consumption.

Conversely, upon the current and power controller 221 determining that the loading information is no longer (such as, consecutive N times) higher than the corresponding threshold, the current and power controller 221 stops sending the throttle request to the V/F control 222, hence, the V/F controller 222 controls the clock generator 230 for recovering the operating frequency provided to the processing unit 300 based on a given operating performance point (OPP). It is noted that the given OPP may be provided by software to the V/F controller 222, wherein the given OPP is used to indicate the combination of an expected operating frequency and the corresponding supply voltage.

The change in the operating frequency also causes the toggle counts/high-level duration/low-level duration of characteristic signals from the selected set of electrical nodes of the processing unit 300 to change in the next observation window. Therefore, the loading information generated by the loading aware engine 210 will vary accordingly. Therefore, the present disclosure can obtain runtime load information from runtime characteristic signals using the trained model, enabling quick responses when adjustments to the operating frequency and supply voltage are needed.

FIG. 5 is a diagram illustrating the relation 100C between power demand and performance level of the processing unit coupled to the example PDN (for example, the processing unit 300 is coupled to the PDN 200 of FIG. 2) according to some implementations of the present disclosure. As shown by FIG. 5, by the PDN 200 as discussed above, a fast control loop can be formed in the electronic device 1000 to control the operating frequency or both the operation frequency and the supply voltage corresponding to the operating frequency of the processing unit 300. Also, through the loading aware engine 210, the PDN limits the micro-seconds level power or current only when current or power peak exceeds the PDN limit 110A. The loading aware engine 210 and current and power controller 221 form a microsecond level reaction to meet the requirement of PDN 200 (such as the PDN limit 110A). Thus, it ensures the actual power demand of the processing unit 300 is approximately closed to the PDN limit 110A while maintaining the actual performance level of the processing unit 300 closing to its original maximum performance level without significantly decreasing it. In the embodiment, no need to add additional voltage regulators in the existing PMIC/PDN are required.

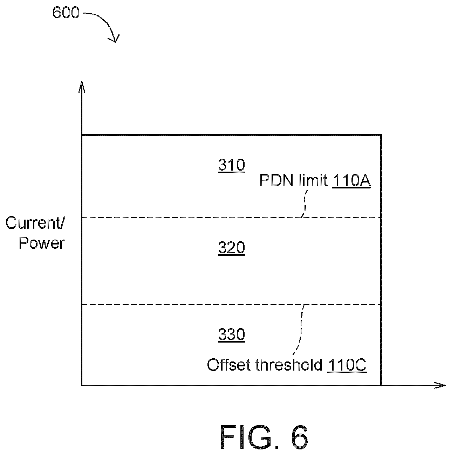

FIG. 6 is a diagram illustrating a dead-zone section 320 for controlling the operating frequency for the processing unit according to some implementations of the present disclosure. When the power/current demand of the processing unit (or xPU) is higher than the PDN limit 110A, it will be regulated around the PDN limit 110A as discussed above, or, otherwise, the frequency throttling will be lifted to allow the processing unit (or xPU) to operates at its full potential (such as close to the requested OPP by software as possible). To stable the actual power demand (as shown by FIG. 5), a dead-zone section 320 (no reaction region) can be set between the PDN limit 110A and a corresponding offset threshold 110C (the offset threshold 110C is smaller than the PDN limit 110A by a preset offset value.), to prevent current/power demands from frequently crossing the PDN limit 110A. For example, only upon the current and power controller 221 determining that the loading information is no longer higher than the PDN limit 110A and is lower than the offset threshold 110C, the current and power controller stops sending the throttle request to the V/F controller 222, and the V/F controller 222 controls the clock generator 230 for recovering the operating frequency provided to the processing unit 300 based on the given OPP.

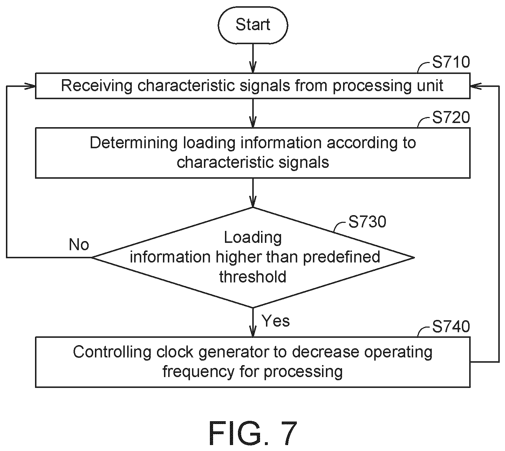

FIG. 7 is a flow chart illustrating an example operation procedure for the PDN according to some implementations of the present disclosure. In step S710, the PDN receives multiple characteristic signals from the processing unit. In step S720, by a trained model, for example, the PDN determines a loading information of the processing unit according to the multiple characteristic signals. The loading information is related to dynamic power and/or dynamic current. In the embodiment, the PDN controls the operating frequency provided to the processing unit based on the loading information. In step S730, the PDN determines whether the loading information is higher than a predefined threshold, and, if yes, it goes to step S740, the controller, for example, controls a clock generator to decrease the operating frequency for the processing unit. Or, if no in step S730, it goes back to S710 and the PDN continues receiving multiple characteristic signals from the processing unit. The clock generator is coupled to the controller and configured to provide the operating frequency to the processing unit.

In certain configurations, the PDN compares the loading information and a corresponding threshold, upon determining that the loading information is higher than the corresponding threshold, the PDN decreases the operating frequency provided to the processing unit.

In certain configurations, upon determining that the loading information is no longer higher than the corresponding threshold, the operating frequency provided to the processing unit is controlled to be recovered based on a given operating performance point.

In certain configurations, upon determining that the loading information is no longer higher than the corresponding threshold and is lower than a corresponding offset threshold lower than the corresponding threshold, the operating frequency provided to the processing unit is controlled to be recovered based on a given operating performance point (OPP).

In certain configurations, in response to a decrease in the operating frequency provided to the processing unit, the supply voltage provided to the processing unit is controlled to be decreased to accommodate the decrease in the operating frequency provided to the processing unit.

In certain configurations, the loading information comprises total power and/or total current, the total power/current is a sum of the dynamic power/current and a leakage power/current, the dynamic power/current is determined according to the multiple characteristic signals using the trained model, and the leakage power/current is obtained according to voltages (such as, the supply voltage) and temperatures of the processing unit.

In certain configurations, the corresponding threshold is a corresponding PDN limit of the processing unit.

While this document may describe many specifics, these should not be construed as limitations on the scope of an invention that is claimed or of what may be claimed, but rather as descriptions of features specific to particular implementations. Certain features that are described in this document in the context of separate implementations can also be implemented in combination in a single embodiment. Conversely, various features that are described in the context of a single embodiment can also be implemented in a plurality of implementations separately or in any suitable sub-combination. Moreover, although features may be described above as acting in certain combinations and even initially claimed as such, one or more features from a claimed combination in some cases can be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made according to what is disclosed.

**Claims**

1.  A power distribution network ,PDN, (200) for power control of a processing unit (300), comprising:

    a loading aware engine (210), configured to receive a plurality of characteristic signals (TC) from the processing unit (300), and determine a loading information of the processing unit (300)according to the plurality of characteristic signals (TC) using a trained model, wherein the loading information is related to a dynamic power and/or a dynamic current;
    a clock generator (230), configured to provide a clock signal with an operating frequency to the processing unit (300); and
    a controller (220), coupled to the loading aware engine (210) and the clock generator (230), and configured to control the clock generator (230) based on the loading information.

2.  The PDN of claim 1, further comprising:
    a voltage regulator (240), coupled to the controller (220), and configured to provide a supply voltage to the processing unit (300).

3.  The PDN of claim 1 or claim 2, wherein the controller (220) comprises:

    a current and power controller (221), coupled to the loading aware engine (210), and configured to compare the loading information and a corresponding threshold of at least one threshold; and
    a hardware-based voltage/frequency (V/F) controller (222), coupled to the current and power controller (221), the clock generator (230), and the voltage regulator (240), and configured to control the voltage regulator (240) and the clock generator (230),
    wherein, upon the current and power controller (221) determining that the loading information is higher than the corresponding threshold, the current and power controller (221) sends a throttle request to the hardware-based V/F controller (222), and the hardware-based V/F controller (222) sends a frequency request to the clock generator (230) for decreasing the operating frequency provided to the processing unit (300).

4.  The PDN of any one of claim1 to claim 3, wherein upon the current and power controller (221) determining that the loading information is no longer higher than the corresponding threshold, the current and power controller (221) stops sending the throttle request to the hardware-based V/F controller (222), and the hardware-based V/F controller (222) controls the clock generator (230) for recovering the operating frequency provided to the processing unit (300) based on a given operating performance point.

5.  The PDN of any one of claim1 to claim 3, wherein upon the current and power controller (221) determining that the loading information is no longer higher than the corresponding threshold and is lower than a corresponding offset threshold lower than the corresponding threshold, the current and power controller (221) stops sending the throttle request to the hardware-based V/F controller (222), and the hardware-based V/F controller (222) controls the clock generator (230) for recovering the operating frequency provided to the processing unit (300) based on a given operating performance point.

6.  The PDN of any one of claim1 to claim 3, wherein in response to a decrease in the operating frequency provided to the processing unit (300), the hardware-based V/F controller (222) further sends a voltage request to the voltage regulator

(240) for decreasing the supply voltage provided to the processing unit (300) to accommodate the decrease in the operating frequency provided to the processing unit (300).

7. The PDN of claim any one of claim1 to 3, wherein the corresponding threshold is a corresponding PDN limit (110A).

8. The PDN of claim 1, wherein the loading information comprises total power and/or total current, the total power/current is a sum of the dynamic power/current and a leakage power/current, the dynamic power/current is determined according to the plurality of characteristic signals using the trained model, and the leakage power/current is obtained according to voltages and temperatures of the processing unit (300).

9. An electronic device (1000), comprising:

   a processing unit (300); and
   a power distribution network, PDN, (200) of anyone of claim 1 to claim 7, coupled to the processing unit (300).

10. An operation method of a PDN (200) for power control of a processing unit (300), comprising:

    receiving a plurality of characteristic signals (TC) from the processing unit (300);
    determining, by a trained model, a loading information of the processing unit (300) according to the plurality of characteristic signals (TC), wherein the loading information is related to a dynamic power and/or a dynamic current; and
    controlling an operating frequency provided to the processing unit (300) based on the loading information.

11. The operation method of claim 10, wherein controlling the operating frequency based on the loading information comprises:

    comparing the loading information and a corresponding threshold of at least one threshold; and
    decreasing the operating frequency provided to the processing unit, upon determining that the loading information is higher than the corresponding threshold.

12. The operation method of claim 10 or claim 11, wherein controlling the operating frequency based on the loading information further comprises:
    upon determining that the loading information is no longer higher than the corresponding threshold, recovering the operating frequency provided to the processing unit (300) based on a given operating performance point.

13. The operation method of claim 10 or claim 11, wherein controlling the operating frequency based on the loading information further comprises:
    upon determining that the loading information is no longer higher than the corresponding threshold and is lower than a loading offset threshold lower than the corresponding threshold, recovering the operating frequency provided to the processing unit (300) based on a given operating performance point.

14. The operation method of claim 10 or claim 11, further comprising:
    in response to a decrease in the operating frequency provided to the processing unit (300), decreasing the supply voltage provided to the processing unit to accommodate the decrease in the operating frequency provided to the processing unit (300).

15. The operation method of claim 10, wherein the loading information comprises total power and/or total current, the total power/current is a sum of the dynamic power/current and a leakage power/current, the dynamic power/current is determined according to the plurality of characteristic signals (TC) using the trained model, and the leakage power/current is obtained according to voltages and temperatures of the processing unit (300).

FIG. 1A

FIG. 1B

1000

FIG. 2

FIG. 3

TC: amount of signal transition (total counts of 1-to-0 and 0-to-1 transitions)
T0: elapsed time of a signal that stays at 0
T1: elapsed time of a signal that stays at 1

FIG. 4

FIG. 5

600

Current/
Power

310
PDN limit 110A

320

330
Offset threshold 110C

FIG. 6

Start

Receiving characteristic signals from processing unit ⌐S710

Determining loading information according to characteristic signals ⌐S720

No ◄── Loading information higher than predefined threshold ⌐S730

│Yes

Controlling clock generator to decrease operating frequency for processing ⌐S740

FIG. 7

Europäisches
Patentamt
European
Patent Office
Office européen
des brevets

# EUROPEAN SEARCH REPORT

**Application Number**

EP 25 17 7463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/124404 A1 (MOHAMMAD ALI [US] ET AL) 29 April 2021 (2021-04-29) <br> * paragraphs [0010] - [0060] * <br> * paragraphs [0088] - [0140] * <br> * figures 1-5 * <br> ----- | 1-15 | INV. <br> G06F1/3206 <br> G06F1/324 <br> G06F1/3296 |
| A | US 2016/179164 A1 (PARK HEE-JUN [US] ET AL) 23 June 2016 (2016-06-23) <br> * paragraphs [0003] - [0006] * <br> * paragraph [0045] * <br> ----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 23 September 2025 | de Biolley, Luc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 7463

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2025

| Patent document cited in search report | Publication date | Patent family member(s) | | Publication date |
|---|---|---|---|---|
| US 2021124404 A1 | 29-04-2021 | NONE | | |
| US 2016179164 A1 | 23-06-2016 | CN | 107111350 A | 29-08-2017 |
| | | EP | 3234730 A1 | 25-10-2017 |
| | | JP | 6693958 B2 | 13-05-2020 |
| | | JP | 2018501569 A | 18-01-2018 |
| | | US | 2016179164 A1 | 23-06-2016 |
| | | WO | 2016105746 A1 | 30-06-2016 |

EPO FORM P0459

For more details about this annex : see Official Journal of the European Patent Office, No. 12/82